# EUROPEAN PATENT SPECIFICATION

(11) **EP 4 530 311 B1**
(45) Date of publication and mention of the grant of the patent: **08.04.2026**
(21) Application number: 24157058.9
(22) Date of filing: 12.02.2024
(51) Int. Cl.: C08J 9/00, C08J 9/32, C08L 27/06, C08K 5/103, C08K 5/11, C08K 5/12, C08K 5/20, C08K 5/23, C08K 5/57, C08K 7/22, C08L 75/04

(54) **MICROCELLULAR FOAMED AND THERMALLY INSULATED DOOR SEALING MATERIAL AND PREPARATION METHOD THEREOF**
MIKROZELLULAR GESCHÄUMTES UND THERMISCH ISOLIERTES TÜRDICHTUNGSMATERIAL UND HERSTELLUNGSVERFAHREN DAFÜR
MATÉRIAU D'ÉTANCHÉITÉ DE PORTE EN MOUSSE MICROCELLULAIRE ET ISOLÉ THERMIQUEMENT ET SON PROCÉDÉ DE PRÉPARATION

(30) Priority: 26.09.2023 CN 202311256909
(43) Date of publication of application: 02.04.2025
(73) Proprietor: Qingdao Jiesheng New Material Technology Co., Ltd., 266000 Qingdao City Shandong Province (CN); Qingdao Science & Technology Industry Park for Advanced Material Co., Ltd., Qingdao, Shandong 266000 (CN)
(72) Inventor: LIANG, Kun, Qingdao City, 266000 (CN); GAO, Lei, Qingdao City, 266000 (CN); LI, Lei, Qingdao City, 266000 (CN)
(74) Representative: Chung, Hoi Kan

(56) References cited:
- CN-A- 103 087 446
- CN-A- 106 496 856
- CN-A- 113 354 909
- US-A- 3 708 441

## Description

### TECHNICAL FIELD

The present disclosure relates to the technical field of plastic materials, and in particular to a microcellular foamed and thermally insulated door sealing material and a preparation method thereof.

### BACKGROUND

In order to improve the sealing and thermal insulation properties of a door seal and reduce the power consumption of a refrigerator to meet higher energy efficiency requirements, the above effects are generally achieved by adjusting the structural characteristics of the door seal and improving and upgrading the raw material formulation of the door seal.

Existing foamed door seals typically have a cell diameter of greater than 50 mm and a cell density of less than 106 cells/cm³. Due to the large cell diameter, these large-sized cells are easily damaged and become the origin of cracks in the door sealing material when being stressed, thus reducing the mechanical properties of the door sealing material. Moreover, prolonged switching operation can accelerate the aging of the door seal, causing the door seal to break. At the same time, existing door seal structural members for a refrigerator are mainly designed to meet energy-saving requirements by adding gasbag structures. However, the gasbag door seal structural member of the refrigerator is prone to problems such as unsmooth opening and closing, condensation, and poor sealing effect.

Therefore, one of the technical problems to be urgently solved is to simultaneously improve the raw materials and structure of the door seal of a refrigerator, so as to improve the sealing and thermal insulation properties of the door seal, reduce the power consumption of the refrigerator, and meet the requirements such as smooth opening and closing, cold leakage prevention, and desirable anti-condensation effects.

CN106496856A discloses a micro-foaming material. The micro-foaming material comprises the following components in parts by weight: 60 to 80 parts of PVC resin, 2.5 to 10 parts of a foaming agent, 12 to 37 parts of a plasticizer, 1 to 5 parts of a heat stabilizer, 5 to 20 parts of inorganic fillers and 1 to 3 parts of a lubricating system. The invention also provides a preparation method of the micro-foaming material and refrigeration equipment applying the micro-foaming material. According to the micro-foaming material provided by the technical scheme of the invention, micro-foaming is conducted by adding the foaming agent, so that the heat conductivity coefficient is reduced, the rebound elasticity of the material is improved and sealing and heat-insulating effects are effectively achieved. The refrigeration equipment provided by the invention can reduce power consumption and save electric energy.

CN103087446A discloses a door seal and a preparation method thereof as well as refrigeration equipment, wherein the door seal comprises the following components in parts by weight: 35-50 parts of PVC (polyvinyl chloride) resins, 5-15 parts of elastomer, 20-40 parts of plasticizer, 0-20 parts of inorganic filler, 1-3 parts of heat stabilizer, 0.5-2 parts of lubricating agent and 0.1-2 parts of foaming agent. The door seal disclosed by the invention has a micro-foaming structure, and has the advantages of better elasticity and tenacity, low mobility, less possibility of being adhered to side plates and a door body, low corrosivity for the side plates and the door body, and the like.

CN113354909A discloses a foaming door seal and a preparation method thereof. The foaming door seal comprises the following components: 80-100 parts of PVC resin powder, 50-70 parts of a plasticizer, 20-30 parts of a foaming agent, 20-50 parts of a filler, 0.2-0.5 part of a lubricant, 2-5 parts of a stabilizer, 0.2-0.5 part of an antioxidant and 1-2 parts of an antibacterial mildew inhibitor, wherein the foaming agent is modified graphene aerogel powder. The modified graphene aerogel is used as the foaming agent to foam the PVC resin, the modified graphene aerogel is not only the foaming agent in the scheme, but also a three-dimensional cross-linked network skeleton structure formed by lapping two-dimensional lamellar modified graphene has superelasticity; therefore, the problems that a traditional foaming agent and silicon dioxide aerogel cannot solve the problems that a foaming door seal is poor in pressure resistance and bubbles are easy to break are solved.

US3708441A discloses an improved process for making plastisol foams. The improved process comprises adding to the plastisol composition, prior to foaming, a material which is compatible with the plastisol and which cures at about room temperature, then foaming the resulting mixture, then curing the material added at about room temperature, and finally fusing the plastisol foam. Optionally, the foam can be shaped before or after the material is cured, but prior to fusing the plastisol composition. A separable aspect of the invention is the application of a vacuum after the composition has been foamed and prior to curing of the material, and optionally releasing the vacuum after the material has cured but prior to fusing the plastisol foam whereby a low density foam is obtained.

### SUMMARY

The invention is set out in the appended set of claims.

In order to solve the above problems, the present disclosure provides a microcellular foamed and thermally insulated door sealing material. In the present disclosure, the combination of the modification of the PVC raw material with the use of the specific foaming agent could solve the problems that the foamed door seal has poor pressure resistance and easily broken air bubbles, and significantly improve the thermal insulation properties, toughness, and strength of the door sealing material.

The present disclosure provides a microcellular foamed and thermally insulated door sealing material, including the following raw materials in parts by weight:
80 parts to 90 parts of polyvinyl chloride (PVC) particles and 10 parts to 20 parts of a thermoplastic polyurethane (TPU) foaming masterbatch.

In the present disclosure, the PVC particles include the following raw materials in parts by weight: 100 parts of a PVC resin powder, 50 parts to 70 parts of a plasticizer, 20 parts to 35 parts of a first filler, 0.2 parts to 0.5 parts of a first lubricant, 2 parts to 5 parts of heat stabilizer, 0.1 parts to 1.2 parts of an auxiliary stabilizer, 0.5 parts to 2 parts of an antibacterial and antifungal agent, 0.2 parts to 2 parts of a cross-linking agent, and 0.9 parts to 1.8 parts of an initiator; and the cross-linking agent is trimethylolpropane trimethacrylate.

In the present disclosure, the TPU foaming masterbatch includes the following raw materials in parts by weight: 60 parts to 80 parts of TPU, 20 parts to 40 parts of a foaming agent, 1 part to 5 parts of a second filler, and 0.1 parts to 0.5 parts of a second lubricant.

In some embodiments, the TPU is a low-melting-point polyester polyurethane with a melting point of 90°C to 120°C and a hardness of 60 A to 70 A.

In the present disclosure, the foaming agent is an acrylic foaming agent with a foaming temperature of 140°C to 180°C.

The acrylic foaming agent is an Expancel microsphere.

In the present disclosure, the antibacterial and antifungal agent is one selected from the group consisting of zinc phosphate and nanozinc.

In some embodiments, the plasticizer is one or more selected from the group consisting of an epoxidized soybean oil (ESO), a dioctyl adipate (DOA) plasticizer, a dioctyl terephthalate (DOTP) plasticizer, and a trioctyl trimellitate (TOTM) plasticizer.

In some embodiments, the first filler and the second filler each are one or more selected from the group consisting of a hollow glass microsphere, calcium carbonate, and barium sulfate.

In some embodiments, the initiator is azodiisobutyronitrile (AIBN).

In some embodiments, the first lubricant and the second lubricant each are is one or two selected from the group consisting of Fischer-Tropsch wax, oxidized polyethylene wax, and oleamide.

In some embodiments, the heat stabilizer is one or two selected from the group consisting of dibutyltin dilaurate and dibutyltin maleate.

In some embodiments, the auxiliary stabilizer is hydrotalcite.

In some embodiments, the PVC particles are prepared by a process including the following steps:
mixing the PVC resin powder with the antibacterial and antifungal agent, stirring at a speed of 100 r/min to 200 r/min and mixing with 2/3 of the plasticizer to obtain a first mixture; stirring the first mixture at 500 r/min, heating to 90°C, adding the foaming agent, the first filler, the heat stabilizer, the auxiliary stabilizer, and the first lubricant, and then adding the remaining 1/3 of the plasticizer to obtain a second mixture; heating the second mixture to 105°C, adding the first filler and stirring to obtain a third mixture; heating the third mixture to 130°C, adding the cross-linking agent and the initiator to obtain a fourth mixture, and subjecting the fourth mixture to cross-linking reaction for 10 min to 120 min; and cooling the reaction product to 70°C with stirring, and introducing the cooled product into a twin-screw extruder, and conducting granulation.

In some embodiments, the TPU foaming masterbatch is prepared by a process including the following steps:
weighing the TPU, the foaming agent, the second filler, and the second lubricant in parts by weight and stirring in a high-speed mixer at a speed of 400 r/min to 600 r/min for 15 min to 30 min to obtain a mixture; heating the mixture to 90°C to 120°C, and then subjecting the heated mixture to extrusion and granulation through a twin-screw extruder to obtain the TPU foaming masterbatch.

In the present disclosure, trimethylolpropane trimethacrylate and the acrylic foaming agent have a synergy that improves the toughness and aging resistance of the door sealing material without the addition of an anti-aging agent.

The present disclosure further provides a method for preparing the microcellular foamed and thermally insulated door sealing material, including:
weighing the PVC particles and the TPU foaming masterbatch in parts by weight, adding the PVC particles to an extruder from a main feed port of the extruder, adding the TPU foaming masterbatch from a side feed port of the extruder, and subjecting the PVC particles and the TPU foaming masterbatch to single-screw extruding to obtain the microcellular foamed and thermally insulated door sealing material.

In some embodiments, the extruding is conducted at a temperature of 120°C to 150°C.

In some embodiments, the extruded microcellular foamed and thermally insulated door sealing material is subjected to corner cutting according to a predetermined size and then left to stand for 6 h to 12 h to obtain a door sealing rubber sleeve finished product; and the door sealing rubber sleeve finished product is inserted with a magnetic strip and subjected to corner cutting and welding to obtain a door seal.

During the preparation, the TPU foaming masterbatch is added at a later stage. Extrusion and moulding on a single-screw extruder can reduce the breakage rate of air bubbles.

Compared with the prior art, the present disclosure has the following beneficial technical effects:
In the present disclosure, the combination of the cross-linking modification of PVC with the synergy of the cross-linking agent and foaming agent can improve the thermal insulation, toughness, low-temperature resistance, aging resistance, and resilience of the door sealing material, thereby reducing the power consumption of a refrigerator and achieving a significant energy-saving effect.

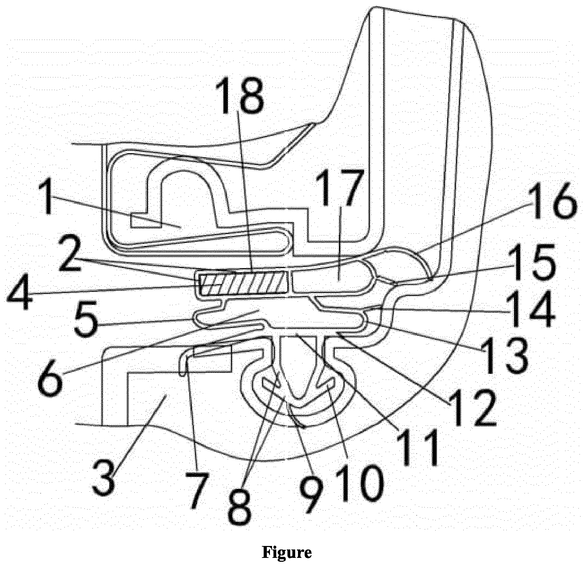

### BRIEF DESCRIPTION OF THE DRAWING

The present disclosure will be further described below with reference to the drawing.

Figure shows a structural schematic diagram of the thermally insulated door seal acoording to the present disclosure.

Reference Signs: 1. Refrigerator box; 2. Door seal structural member; 3. Refrigerator door; 4. Magnetic strip; 5. Telescopic deformation rib; 6. Main gasbag; 7. Cover lining sealing fin; 8. Installation cabin gasbag; 9. Cabin sealing fin; 10. Cabin anti-slip rib; 11. Middle thickening beam part; 12. Small conjoined part; 13. U-shaped connecting rib part; 14. First sealing short fin; 15. Second sealing short fin; 16. C-shaped sealing edge; 17. Auxiliary gasbag; 18. Magnetic strip gasbag.

### DETAILED DESCRIPTION OF THE EMBODIMENTS

The technical solutions of the present disclosure will be further described below with reference to the examples.

### Example 1

A microcellular foamed and thermally insulated door sealing material consisted of 85 parts of PVC particles and 15 parts of a TPU foaming masterbatch.

The PVC particles consisted of the following raw materials in parts by weight: 100 parts of a PVC resin powder, 55 parts of a TOTM plasticizer, 35 parts of calcium carbonate, 0.2 parts of Fischer-Tropsch wax, 2 parts of dibutyltin dilaurate, 0.1 parts of hydrotalcite, 1.5 parts of nanozinc, 1.5 parts of trimethylolpropane trimethacrylate, and 1.0 part of AIBN.

The TPU foaming masterbatch consisted of the following raw materials in parts by weight: 80 parts of TPU, 40 parts of a foaming agent, 5 parts of a hollow glass microsphere, and 0.3 parts of oxidized polyethylene wax. The TPU was a low-melting-point polyester polyurethane with a melting point of 120°C and a hardness of 70 A. The foaming agent was an Expancel microsphere foaming agent with a model number of 920DU40 and was purchased from Nouryon Chemicals (Guangzhou) Co., Ltd.

The PVC particles were prepared as follows:
The PVC resin powder was mixed with the antibacterial and antifungal agent, stirred at 200 r/min and mixed with 2/3 of the plasticizer, obtaining a first mixture. The first mixture was stirred at 500 r/min, heated to 90°C, and mixed with the foaming agent, the filler, the heat stabilizer, the auxiliary stabilizer, and the lubricant, and then mixed with the remaining 1/3 of the plasticizer, obtaining a second mixture. The second mixture was heated to 105°C, mixed with the filler and stirred, obtaining a third mixture. The third mixture was heated to 130°C, mixed with the cross-linking agent and the initiator, obtaining a fourth mixture. The fourth mixture was subjected to cross-linking reaction for 90 min. The reaction product was cooled to 70°C with stirring, and the cooled product was introduced into a twin-screw extruder and subjected to granulation.

The TPU foaming masterbatch was prepared as follows:
The TPU, the foaming agent, the filler, and the lubricant were weighed in parts by weight, and stirred in a high-speed mixer at 600 r/min for 30 min, obtaining a mixture. The mixture was heated to 120°C, and then subjected to extrusion and granulation through a twin-screw extruder, obtaining the TPU foaming masterbatch.

The microcellular foamed and thermally insulated door sealing material was prepared as follows:
The PVC particles and the TPU foaming masterbatch were weighed in parts by weight. The PVC particles were added to an extruder from a main feed port of the extruder. The TPU foaming masterbatch was added from a side feed port of the extruder. The raw materials were extruded at 150°C, obtaining the microcellular foamed and thermally insulated door sealing material.

### Example 2

This example was the same as Example 1, except that:
the microcellular foamed and thermally insulated door sealing material consisted of 80 parts of PVC particles and 20 parts of a TPU foaming masterbatch;
the PVC particles consisted of the following raw materials in parts by weight: 100 parts of a PVC resin powder, 70 parts of a DOA plasticizer, 25 parts of a hollow glass microsphere, 0.5 parts of oleamide, 3 parts of dibutyltin maleate, 0.6 parts of hydrotalcite, 0.5 parts of zinc phosphate, 1.0 part of trimethylolpropane trimethacrylate, and 1.0 part of AIBN; and
the TPU foaming masterbatch consisted of the following raw materials in parts by weight: 60 parts of TPU, 35 parts of a foaming agent, 3 parts of barium sulfate, and 0.35 parts of oxidized polyethylene wax; the TPU was a low-melting-point polyester polyurethane with a melting point of 120°C and a hardness of 70 A; the foaming agent was an Expancel microsphere foaming agent with a model number of 920DU40 and was purchased from Nouryon Chemicals (Guangzhou) Co., Ltd.

### Example 3

This example was the same as Example 1, except that:
the microcellular foamed and thermally insulated door sealing material consisted of 90 parts of PVC particles and 10 parts of a TPU foaming masterbatch;
the PVC particles consisted of the following raw materials in parts by weight: 100 parts of a PVC resin powder, 55 parts of ESO, 20 parts of a hollow glass microsphere, 0.25 parts of Fischer-Tropsch wax, 2.5 parts of dibutyltin maleate, 1.2 parts of hydrotalcite, 1.5 parts of zinc phosphate, 2 parts of trimethylolpropane trimethacrylate, and 1.1 parts of AIBN; and
the TPU foaming masterbatch consisted of the following raw materials in parts by weight: 75 parts of TPU, 30 parts of a foaming agent, 2 parts of barium sulfate, and 0.3 parts of oleamide. The TPU was a low-melting-point polyester polyurethane with a melting point of 120°C and a hardness of 70 A; the foaming agent was an Expancel microsphere foaming agent with a model number of 920DU40 and was purchased from Nouryon Chemicals (Guangzhou) Co., Ltd.

### Comparative Example 1

This comparative example was the same as Example 1, except that: no cross-linking agent and initiator were added.

### Comparative Example 2

This comparative example was the same as Example 1, except that: the foaming agent was replaced with an equal amount of an AC foaming agent.

### Comparative Example 3

This example was the same as Example 1, except that: trimethylolpropane trimethacrylate was replaced by an equal amount of dicumyl peroxide.

### Test Example 1

Elongation at break and aging resistance of the products prepared according to the examples and comparative examples were tested. The results are shown in Table 1.

The aging resistance test method was carried out as follows: the elongation retention rate was tested after placing the samples under 40 W ultraviolet irradiation for 2,500 h.

**Table 1**

| Example No. | Elongation at break (%) | Elongation retention rate (%) |
|---|---|---|
| Example 1 | 379.26 | 99.55 |
| Example 2 | 381.03 | 99.10 |
| Example 3 | 378.44 | 99.46 |
| Comparative Example 1 | 277.81 | 78.26 |
| Comparative Example 2 | 310.52 | 80.32 |
| Comparative Example 3 | 373.75 | 82.71 |

As shown in Figure, a door seal structure prepared using the microcellular foamed and thermally insulated door sealing material in the present disclosure included a refrigerator box 1, a door seal structural member 2, and a refrigerator door 3.

The door seal structural member 2 was arranged on a contact surface between the refrigerator door 3 and the refrigerator box 1.

The door seal structural member 2 was prepared from the microcellular foamed and thermally insulated door sealing material in the present disclosure. The door seal structural member 2 included a main gasbag 6, an auxiliary gasbag 17, and a magnetic strip gasbag 18. The magnetic strip gasbag 18 was provided with a magnetic strip 4 for suction with the refrigerator box 1.

The auxiliary gasbag 17 was arranged at the right end of the magnetic strip gasbag 18, and the main gasbag 6 was arranged at the lower end of the magnetic strip gasbag 18 and the auxiliary gasbag 17.

The main gasbag 6 included a middle thickening beam part 11, a telescopic deformation rib 5, and a U-shaped connecting rib part 13. The upper left end of the middle thickening beam part 11 was connected to the lower wall of the magnetic strip gasbag 18 through the telescopic deformation rib 5, and the upper right end of the middle thickening beam part 11 was connected to the lower wall of the auxiliary gasbag 17 through the U-shaped connecting rib part 13. The lower left end of the middle thickening beam part 11 was fitted with the refrigerator door 3 through a cover lining sealing fin 7. The lower right end of the middle thickening beam part 11 was fitted with the refrigerator door 3 through a small conjoined part 12. This structure can prevent the thickening beam part 11 from being over-stretched and warped edges from leaking cold.

An installation cabin gasbag 8 was arranged at the lower end of the middle thickening beam part 11, and a cabin anti-slip rib 10 was arranged separately on the left and right sides of the installation cabin gasbag 8. The left and right two cabin anti-slip ribs 10 that were arranged diagonally upward enabled the left and right sides of the installation cabin gasbag 8 and an inner side of a concave groove of the refrigerator door 3 to form two relatively-closed chambers that were arranged left and right, which further improves the sealing performance between the refrigerator box 1 and the refrigerator door 3 and avoided condensation when the refrigerator door 3 was opened and closed. The bottom end of the installation cabin gasbag 8 was provided with a cabin sealing fin 9 for reducing installation resistance. The refrigerator door 3 was provided with a groove that engaged with the installation cabin gasbag 8, thus achieving a desirable connection stability.

The U-shaped connecting rib part 13 was provided with a first sealing short fin 14 that fitted with the refrigerator door 3, The U-shaped connecting rib part 13, the first sealing short fin 14, the small conjoined part 12, and the refrigerator door 3 formed a third chamber. The third chamber could provide a desirable sealing between a lower part of a step of the refrigerator door 3 and the refrigerator box 1, and prevent cold leakage or condensation from occurring between the lower part of the step of the refrigerator door 3 and the refrigerator box 1.

The right end of the auxiliary gasbag 17 was provided with a second sealing short fin 15 that fitted with the refrigerator door 3. The second sealing short fin 15, the first sealing short fin 14, the auxiliary gasbag 17, and the refrigerator door 3 formed a second chamber. The second chamber prevented cold leakage or condensation from occurring between the middle part of the step of the refrigerator door 3 and the refrigerator box 1, thereby achieving multiple sealing effects. This further enhanced a sealing effect of the door seal, increased a temperature gradient distance between the inside and outside of the refrigerator, and reduced a possibility of hot and cold exchange, thereby reducing an energy consumption of the refrigerator.

The upper right end of the auxiliary gasbag 17 was provided with a C-shaped sealing edge 16 that fitted with the refrigerator door 3. The variable overlap part, the auxiliary gasbag 17, and the second sealing short fin 15 formed a first chamber. The first chamber could enhance the overall resistance to extrusion and deformation, and could prevent cold leakage or condensation from occurring between the upper part of the step of the refrigerator door 3 and the refrigerator box 1.

The upper top edge of the magnetic strip gasbag 18, the upper top edge of the auxiliary gasbag 17, and the variable overlap part could form an upturned S-shaped sealing structure. The right side part of the upturned S-shaped sealing structure could form an overlapping air chamber with a smooth outside between the refrigerator door 3 and the refrigerator box 1. The overlapping air chamber with a smooth outside could make the refrigerator door 3 open and close smoothly and provide a desirable sealing effect between the refrigerator door 3 and the refrigerator box 1. The left side of the upturned S-shaped sealing structure could be magnetically attached to the refrigerator box 1 to ensure that the entire upper top surface of the door seal structural member 2 was tightly attached to the refrigerator box 1 to prevent cold leakage.

The above examples are only intended to describe the preferred embodiments of the present disclosure, but not to limit the scope of the present disclosure. Various modifications and improvements made by those of ordinary skill in the art based on the technical solution of the present disclosure without departing from the design spirit of the present disclosure shall fall within the scope of the appended claims of the present disclosure.

## Claims

1. A microcellular foamed and thermally insulated door sealing material, comprising the following raw materials in parts by weight:
80 parts to 90 parts of polyvinyl chloride (PVC) particles and 10 parts to 20 parts of a thermoplastic polyurethane (TPU) foaming masterbatch; wherein
the PVC particles comprise the following raw materials in parts by weight: 100 parts of a PVC resin powder, 50 parts to 70 parts of a plasticizer, 20 parts to 35 parts of a first filler, 0.2 parts to 0.5 parts of a first lubricant, 2 parts to 5 parts of heat stabilizer, 0.1 parts to 1.2 parts of an auxiliary stabilizer, 0.5 parts to 2 parts of an antibacterial and antifungal agent, 0.2 parts to 2 parts of a cross-linking agent, and 0.9 parts to 1.8 parts of an initiator, the cross-linking agent being trimethylolpropane trimethacrylate, and the antibacterial and antifungal agent being one selected from the group consisting of zinc phosphate and nanozinc; and
the TPU foaming masterbatch comprises the following raw materials in parts by weight: 60 parts to 80 parts of TPU, 20 parts to 40 parts of a foaming agent, 1 part to 5 parts of a second filler, and 0.1 parts to 0.5 parts of a second lubricant, the foaming agent being an acrylic foaming agent, which is an Expancel microsphere, with a foaming temperature of 140°C to 180°C.

2. The door sealing material of claim 1, wherein the plasticizer is one or more selected from the group consisting of an epoxidized soybean oil (ESO), a dioctyl adipate (DOA) plasticizer, a dioctyl terephthalate (DOTP) plasticizer, and a trioctyl trimellitate (TOTM) plasticizer.

3. The door sealing material of claim 1, wherein the first filler and the second filler each are one or more selected from the group consisting of a hollow glass microsphere, calcium carbonate, and barium sulfate.

4. The door sealing material of claim 1, wherein the initiator is azodiisobutyronitrile (AIBN).

5. The door sealing material of claim 1, wherein the first lubricant and the second lubricant each are one or two selected from the group consisting of Fischer-Tropsch wax, oxidized polyethylene wax, and oleamide.

6. The door sealing material of claim 1, wherein the heat stabilizer is one or two selected from the group consisting of dibutyltin dilaurate and dibutyltin maleate.

7. The door sealing material of claim 1, wherein the auxiliary stabilizer is hydrotalcite.

8. The door sealing material of claim 1, wherein the TPU foaming masterbatch is prepared by a process comprising the following steps:
weighing the TPU, the foaming agent, the second filler, and the second lubricant in parts by weight and stirring in a high-speed mixer at a speed of 400 r/min to 600 r/min for 15 min to 30 min to obtain a mixture; heating the mixture to 90°C to 120°C, and then subjecting the heated mixture to extrusion and granulation through a twin-screw extruder to obtain the TPU foaming masterbatch.

9. A method for preparing the microcellular foamed and thermally insulated door sealing material of any one of claims 1 to 8, comprising:
weighing the PVC particles and the TPU foaming masterbatch in parts by weight, adding the PVC particles to an extruder from a main feed port of the extruder, adding the TPU foaming masterbatch from a side feed port of the extruder, and subjecting the PVC particles and the TPU foaming masterbatch to single-screw extruding to obtain the microcellular foamed and thermally insulated door sealing material.

## Patentansprüche

1. Ein mikrozelluläres, geschäumtes und wärmeisolierendes Türdichtungsmaterial, umfassend die folgenden Rohstoffe in Gewichtsteilen:
80 Gewichtsteile bis 90 Gewichtsteile Polyvinylchlorid-(PVC-) Partikel und 10 Gewichtsteile bis 20 Gewichtsteile eines schäumfähigen Thermoplast-Polyurethan-(TPU-) Masterbatches, wobei
die PVC-Partikel die folgenden Rohstoffe in Gewichtsteilen umfassen: 100 Gewichtsteile PVC-Harzpulver, 50 Gewichtsteile bis 70 Gewichtsteile eines Weichmachers, 20 Gewichtsteile bis 35 Gewichtsteile eines ersten Füllstoffs, 0,2 Gewichtsteile bis 0,5 Gewichtsteile eines ersten Schmiermittels, 2 Gewichtsteile bis 5 Gewichtsteile eines Wärmestabilisators, 0,1 Gewichtsteile bis 1,2 Gewichtsteile eines Hilfsstabilisators, 0,5 Gewichtsteile bis 2 Gewichtsteile eines antibakteriellen und antifungalen Mittels, 0,2 Gewichtsteile bis 2 Gewichtsteile eines Vernetzungsmittels sowie 0,9 Gewichtsteile bis 1,8 Gewichtsteile eines Initiators, wobei das Vernetzungsmittel Trimethylolpropantrimethacrylat ist und das antibakterielle und antifungale Mittel eines aus der Gruppe bestehend aus Zinkphosphat und Nanozink ist, und
der TPU-Schaummasterbatch die folgenden Rohstoffe in Gewichtsteilen umfasst: 60 Gewichtsteile bis 80 Gewichtsteile TPU, 20 Gewichtsteile bis 40 Gewichtsteile eines Treibmittels, 1 Gewichtsteil bis 5 Gewichtsteile eines zweiten Füllstoffs sowie 0,1 Gewichtsteile bis 0,5 Gewichtsteile eines zweiten Schmiermittels, wobei das Treibmittel ein acrylbasiertes Treibmittel in Form von Expancel-Mikrosphären ist,
mit einer Schäumtemperatur von 140 °C bis 180 °C.

2. Türdichtungsmaterial nach Anspruch 1, wobei der Weichmacher einer oder mehrere aus der Gruppe bestehend aus epoxidiertem Sojaöl (ESO), Dioctyladipat (DOA), Dioctylterephthalat (DOTP) und Trioctyltrimellitat (TOTM) ist.

3. Türdichtungsmaterial nach Anspruch 1, wobei der erste Füllstoff und der zweite Füllstoff jeweils einer oder mehrere aus der Gruppe bestehend aus hohlen Glasmikrosphären, Calciumcarbonat und Bariumsulfat sind.

4. Türdichtungsmaterial nach Anspruch 1, wobei der Initiator Azodiisobutyronitril (AIBN) ist.

5. Türdichtungsmaterial nach Anspruch 1, wobei das erste Schmiermittel und das zweite Schmiermittel jeweils eines oder zwei aus der Gruppe bestehend aus Fischer-Tropsch-Wachs, oxidiertem Polyethylenwachs und Oleamid sind.

6. Türdichtungsmaterial nach Anspruch 1, wobei der Wärmestabilisator eines oder zwei aus der Gruppe bestehend aus Dibutylzinn-Dilaurat und Dibutylzinn-Maleat ist.

7. Türdichtungsmaterial nach Anspruch 1, wobei der Hilfsstabilisator Hydrotalkit ist.

8. Türdichtungsmaterial nach Anspruch 1, wobei der TPU-Schaummasterbatch durch ein Verfahren hergestellt wird, das die folgenden Schritte umfasst:
Abwiegen des TPU, des Treibmittels, des zweiten Füllstoffs und des zweiten Schmiermittels in Gewichtsteilen und Mischen in einem Hochgeschwindigkeitsmischer mit einer Drehzahl von 400 Umdrehungen pro Minute bis 600 Umdrehungen pro Minute über eine Dauer von 15 Minuten bis 30 Minuten zur Erzeugung einer Mischung; Erwärmen der Mischung auf eine Temperatur von 90 °C bis 120 °C und anschließendes Extrudieren und Granulieren der erwärmten Mischung mittels eines Doppelschneckenextruders zur Erzeugung des TPU-Schaummasterbatches.

9. Verfahren zur Herstellung eines mikrozellulären, geschäumten und wärmeisolierenden Türdichtungsmaterials nach einem der Ansprüche 1 bis 8, umfassend
die Schritte des Abwiegens der PVC-Partikel und des TPU-Schaummasterbatches in Gewichtsteilen, des Zuführens der PVC-Partikel über einen Hauptzufuhranschluss in einen Extruder, des Zuführens des TPU-Schaummasterbatches über einen seitlichen Zufuhranschluss in den Extruder sowie des einstufigen Einschneckenextrudierens der PVC-Partikel und des TPU-Schaummasterbatches zur Erzeugung des mikrozellulären, geschäumten und wärmeisolierenden Türdichtungsmaterials.

## Revendications

1. Un matériau d'étanchéité de porte à structure microcellulaire moussée et à isolation thermique, comprenant les matières premières suivantes, exprimées en parties en poids :
de 80 parties à 90 parties de particules de polychlorure de vinyle (PVC) et de 10 parties à 20 parties d'un concentré moussant de polyuréthane thermoplastique (TPU) ; dans lequel
les particules de PVC comprennent les matières premières suivantes, exprimées en parties en poids : 100 parties de poudre de résine PVC, de 50 parties à 70 parties d'un plastifiant, de 20 parties à 35 parties d'une première charge, de 0,2 partie à 0,5 partie d'un premier lubrifiant, de 2 parties à 5 parties d'un stabilisant thermique, de 0,1 partie à 1,2 partie d'un stabilisant auxiliaire, de 0,5 partie à 2 parties d'un agent antibactérien et antifongique, de 0,2 partie à 2 parties d'un agent de réticulation et de 0,9 partie à 1,8 partie d'un initiateur, l'agent de réticulation étant le triméthylolpropane triméthacrylate, et l'agent antibactérien et antifongique étant choisi dans le groupe constitué du phosphate de zinc et du nanozinc ; et
le concentré moussant de TPU comprend les matières premières suivantes, exprimées en parties en poids : de 60 parties à 80 parties de TPU, de 20 parties à 40 parties d'un agent moussant, de 1 partie à 5 parties d'une seconde charge et de 0,1 partie à 0,5 partie d'un second lubrifiant, l'agent moussant étant un agent moussant acrylique constitué de microsphères Expancel,
avec une température de moussage comprise entre 140 °C et 180 °C.

2. Le matériau d'étanchéité de porte selon la revendication 1, dans lequel le plastifiant est un ou plusieurs composés choisis dans le groupe constitué de l'huile de soja époxydée (ESO), de l'adipate de dioctyle (DOA), du téréphtalate de dioctyle (DOTP) et du trimellitate de trioctyle (TOTM).

3. Le matériau d'étanchéité de porte selon la revendication 1, dans lequel la première charge et la seconde charge sont chacune une ou plusieurs substances choisies dans le groupe constitué des microsphères de verre creuses, du carbonate de calcium et du sulfate de baryum.

4. Le matériau d'étanchéité de porte selon la revendication 1, dans lequel l'initiateur est l'azodiisobutyronitrile.

5. Le matériau d'étanchéité de porte selon la revendication 1, dans lequel le premier lubrifiant et le second lubrifiant sont chacun un ou deux composés choisis dans le groupe constitué de la cire de Fischer-Tropsch, de la cire de polyéthylène oxydée et de l'oléamide.

6. Le matériau d'étanchéité de porte selon la revendication 1, dans lequel le stabilisant thermique est un ou deux composés choisis dans le groupe constitué du dilaurate de dibutylétain et du maléate de dibutylétain.

7. Le matériau d'étanchéité de porte selon la revendication 1, dans lequel le stabilisant auxiliaire est l'hydrotalcite.

8. Le matériau d'étanchéité de porte selon la revendication 1, dans lequel le concentré moussant de TPU est préparé selon un procédé comprenant les étapes suivantes :
peser le TPU, l'agent moussant, la seconde charge et le second lubrifiant en parties en poids, puis effectuer un mélange dans un mélangeur à grande vitesse à une vitesse comprise entre 400 tours par minute et 600 tours par minute pendant une durée de 15 minutes à 30 minutes afin d'obtenir un mélange ; chauffer le mélange à une température comprise entre 90 °C et 120 °C, puis soumettre le mélange chauffé à une extrusion et à une granulation au moyen d'une extrudeuse à double vis afin d'obtenir le concentré moussant de TPU.

9. Procédé de préparation du matériau d'étanchéité de porte à structure microcellulaire moussée et à isolation thermique selon l'une quelconque des revendications 1 à 8, comprenant
les étapes consistant à peser les particules de PVC et le concentré moussant de TPU en parties en poids, à introduire les particules de PVC dans une extrudeuse par une entrée d'alimentation principale de l'extrudeuse, à introduire le concentré moussant de TPU par une entrée d'alimentation latérale de l'extrudeuse, puis à soumettre les particules de PVC et le concentré moussant de TPU à une extrusion par vis simple afin d'obtenir le matériau d'étanchéité de porte à structure microcellulaire moussée et à isolation thermique.
